# DEMANDE DE BREVET EUROPEEN

(11) **EP 4 749 170 A1**
(43) Date de publication de la demande: **27.05.2026**
(21) Numéro de dépôt: 25217738.1
(22) Date de dépôt: 21.11.2025
(51) Int. Cl.: F16L 29/04, F16L 37/32

(54) **RACCORD DE DISPOSITIF DE COUPLAGE DE CONDUITE DE FLUIDE**

(30) Priorité: 22.11.2024 FR 2412846
(71) Demandeur: CRYOPAL, 77600 Bussy Saint-Georges (FR)
(72) Inventeur: Lekhel, Manal, 77200 TORCY (FR)
(74) Mandataire: Delaveau, Sophie

(57) **Abrégé**

L'invention porte principalement sur un raccord de dispositif de couplage de conduite de fluide comportant :
- un corps longitudinal (2), et
- un organe de circulation contrôlée du fluide logé dans le corps longitudinal (2) comportant, un clapet, un élément de guidage et de maintien du clapet (15) comprenant une première partie comportant une zone centrale de logement longitudinal de la tige du clapet, et une base (17) de plus grand diamètre que la première partie, et un ressort comprimé s'étendant longitudinalement depuis la tête de clapet (8) jusqu'à la base (17) de l'organe de guidage et de maintien du clapet (15).
L'invention est essentiellement caractérisée en ce que ledit raccord comprend un système de maintien fixe de l'organe de circulation contrôlée du fluide dans le corps longitudinal (2) comprenant :
- au moins un méplat (20) réalisé au niveau de l'extrémité libre (23) de la base (17) de l'élément de guidage et de maintien du clapet et qui définit un épaulement (21) qui se prolonge par une surface d'appui (22), et
- une empreinte (24) réalisée sur la face interne du corps longitudinal (2) comportant :
∘ une butée de blocage en translation (26) en saillie à l'intérieur du corps longitudinal (2) sur laquelle l'épaulement (21) du méplat (20) de la base (17) de l'élément de guidage (15) est maintenu en appui par la force de rappel du ressort (9), et
∘ deux butées de blocage en rotation (27) en saillie à l'intérieur du corps longitudinal (2) et situées de part et d'autre de la surface d'appui (22) du méplat (20) lorsque l'épaulement (21) du méplat (20) est en appui sur la butée de blocage en translation (26).

## Description

### DOMAINE TECHNIQUE DE L'INVENTION

Le domaine technique de l'invention est celui des dispositifs de couplage de conduite de fluide, et plus particulièrement de fluide cryogénique.

L'invention porte plus particulièrement sur un raccord de dispositif de couplage de conduite de fluide.

### ARRIERE-PLAN TECHNOLOGIQUE DE L'INVENTION

Les dispositifs de couplage sont connus pour transférer des fluides, notamment des fluides cryogéniques, depuis un réservoir de stockage vers un réservoir d'utilisation mobile.

Pour ce faire, le dispositif de couplage présente un premier raccord mâle et un second raccord femelle qui sont des vannes à clapet dont les extrémités sont disposées en aboutement. Chaque vanne comporte un orifice de passage du fluide duquel dépasse un clapet en appui sur un ressort. En position de repos, le ressort maintient les clapets en prise dans les orifices de passage du fluide respectifs, le raccord étant ainsi en position fermée. Le couplage des raccords engendre un déplacement des ressorts et donc des clapets. Sous l'effet du couplage, le déplacement des clapets engendre la création d'un orifice de passage. Le dispositif dans son ensemble passe alors d'une position dans laquelle les deux raccords mâle et femelle sont fermés, à une position dans laquelle les deux raccords mâle et femelle sont ouverts, en assurant le transfert du fluide à travers le dispositif de couplage.

Les raccords sont généralement constitués en premier lieu d'un corps longitudinal qui s'étend depuis une extrémité de jonction à une conduite jusqu'à une extrémité de couplage au second raccord, laquelle extrémité de couplage présente un orifice de passage du fluide en communication fluidique avec un canal d'écoulement ménagé dans le corps longitudinal et qui s'étend depuis l'extrémité de couplage jusqu'à l'extrémité de jonction assurant ainsi la circulation du fluide lorsque les deux raccords sont ouverts.

Les raccords comportent également un organe de circulation contrôlée du fluide logé dans le corps longitudinal et qui comprend :
- le clapet comprenant une tête de clapet surmontant une tige, laquelle tête de clapet est déplaçable longitudinalement entre une position dégagée dans laquelle l'orifice de passage est ouvert, et une position fermée de prise étanche dans laquelle l'orifice de passage est obturé,
- un élément de guidage et de maintien du clapet comprenant une première partie comportant une zone centrale de logement longitudinal de la tige du clapet de laquelle fait saillie la tête de clapet du côté de l'orifice de passage, et une base de plus grand diamètre que la première, et
- un ressort comprimé s'étendant longitudinalement autour de la première partie de l'organe de guidage et de maintien du clapet depuis la tête de clapet jusqu'à la base de l'organe de de guidage et de maintien du clapet.

Le maintien de ces trois pièces, clapet, élément de guidage et de maintien et ressort de l'organe de circulation contrôlée du fluide dans le corps longitudinal, est généralement réalisé au moyen d'un circlip entourant la base de l'élément de guidage et logé dans une rainure ménagée sur la face interne du corps longitudinale du raccord.

Ce système de maintien engendre des problèmes de sécurité résultant le plus souvent d'un logement partiel du circlip dans la rainure au montage de l'organe de circulation contrôlée du fluide dans le corps longitudinal. Cela entraîne des risques de délogement total du circlip conduisant au déplacement des pièces constituant l'organe de circulation contrôlée du fluide, à une ouverture trop importante du raccord et ainsi à un risque de brûlure cryogénique pour l'utilisateur.

Dans ce contexte, l'invention vise un raccord pour lequel le maintien de l'organe de circulation contrôlée du fluide dans le corps longitudinal est sécurisé sur toute la durée de vie du raccord. L'invention vise également un raccord pour lequel le montage de l'organe de circulation contrôlée du fluide dans le corps longitudinal est facilité.

### RESUME DE L'INVENTION

Le raccord de l'invention est destiné à former partie mâle ou femelle d'un dispositif de couplage de conduite de fluide, et comporte :
- un corps longitudinal (2) qui s'étend depuis une extrémité de jonction à une conduite (3) jusqu'à une extrémité de couplage (4) à un second raccord coopérant du dispositif de couplage, laquelle extrémité de couplage (4) présente un orifice de passage du fluide (5) en communication fluidique avec un canal d'écoulement (6) ménagé dans le corps longitudinal (2) et qui s'étend depuis l'extrémité de couplage (4) jusqu'à l'extrémité de jonction (3), et
- un organe de circulation contrôlée du fluide (13) logé dans le corps longitudinal (2) et comportant :
   ∘ un clapet (7) comprenant une tête de clapet (8) surmontant une tige (14), laquelle tête de clapet (8) est déplaçable longitudinalement entre une position dégagée dans laquelle l'orifice de passage (5) est ouvert, et une position fermée de prise étanche dans laquelle l'orifice de passage (5) est obturé,
   ∘ un élément de guidage et de maintien du clapet (15) comprenant une première partie (16) comportant une zone centrale de logement longitudinal de la tige (18) du clapet (7) de laquelle fait saillie la tête de clapet (8) du côté de l'orifice de passage (5), et une base (17) de plus grand diamètre que la première partie (16), et
   ∘ un ressort comprimé (9) s'étendant longitudinalement autour de la première partie (16) de l'organe de guidage et de maintien du clapet (15) depuis la tête de clapet (8) jusqu'à la base (17) de l'organe de guidage et de maintien du clapet (15),
le dit raccord étant caractérisé en ce qu'il comprend un système de maintien fixe de l'organe de circulation contrôlée du fluide (19) dans le corps longitudinal (2) comprenant :
- au moins un méplat (20) qui est réalisé au niveau d'une extrémité libre (23) de la base (17) de l'élément de guidage et de maintien du clapet (15) du côté opposé au clapet (7) et qui définit un épaulement (21) qui se prolonge par une surface d'appui (22) s'étendant jusqu'à l'extrémité libre (23) de ladite base (17), et
- une empreinte (24) réalisée sur la face interne (25) du corps longitudinal (2) comportant :
   ∘ une butée de blocage en translation (26) de l'organe de circulation contrôlée du fluide (13) en saillie à l'intérieur du corps longitudinal (2) et sur laquelle l'épaulement (21) du méplat (20) de la base (17) de l'élément de guidage (15) est maintenu en appui par la force de rappel du ressort (9), et
   ∘ deux butées de blocage en rotation (27) de l'organe de circulation contrôlée du fluide (13) en saillie à l'intérieur du corps longitudinal (2) et situées de part et d'autre de la surface d'appui (22) du méplat (20) de la base (17) de l'élément de guidage et de maintien du clapet (15) lorsque l'épaulement (21) du méplat (20) est en appui sur la butée de blocage en translation (26).

Le raccord de l'invention peut également comporter les caractéristiques optionnelles suivantes considérées isolément ou selon toutes les combinaisons techniques possibles :
- la base (17) de l'élément de guidage et de maintien du clapet (15) présente une section définissant au moins deux bords longitudinaux d'extrémité (33), l'extrémité libre de chaque bord longitudinal (33) du côté opposé au clapet (7) présente un méplat (20) définissant un épaulement (21) qui se prolonge par une surface d'appui (22) s'étendant jusqu'à l'extrémité libre dudit bord (33), et le système de maintien fixe de l'organe de circulation contrôlée du fluide (13) comporte au moins deux empreintes (24) réalisées à distance périmétrique l'une de l'autre sur la face interne (25) du corps longitudinal (2), recevant chacune un méplat (20), et comportant chacune :
   ∘ une butée de blocage en translation (26) de l'organe de circulation contrôlée du fluide (13) en saillie à l'intérieur du corps longitudinal (2) et sur laquelle l'épaulement (21) du méplat correspondant (20) de la base (17) de l'élément de guidage (15) est maintenu en appui par la force de rappel du ressort (9), et
   ∘ deux butées de blocage en rotation (27) de l'organe de circulation contrôlée du fluide (13) en saillie à l'intérieur du corps longitudinal (2) et situées de part et d'autre de la surface d'appui (22) du méplat correspondant (20) de la base (17) de l'élément de guidage (15) lorsque l'épaulement (21) du méplat (20) est en appui sur la butée de blocage en translation (26).
- la base (17) de l'élément de guidage et de maintien du clapet (15) présente une section sensiblement triangulaire définissant trois bords longitudinaux d'extrémité (33), l'extrémité libre de chaque bord longitudinal (33) du côté opposé au clapet (7) présente un méplat (20) définissant un épaulement (21) qui se prolonge par une surface d'appui (22) s'étendant jusqu'à l'extrémité libre dudit bord (33), et le système de maintien fixe de l'organe de circulation contrôlée du fluide (13) comporte au moins trois empreintes (24) réalisées à distance périmétrique l'une de l'autre sur la face interne (25) du corps longitudinal (2), recevant chacune un méplat (20), et comportant chacune :
   ∘ une butée de blocage en translation (26) de l'organe de circulation contrôlée du fluide (13) en saillie à l'intérieur du corps longitudinal (2) et sur laquelle l'épaulement (21) du méplat correspondant (20) de la base (17) de l'élément de guidage (15) est maintenu en appui par la force de rappel du ressort (9), et
   ∘ deux butées de blocage en rotation (27) de l'organe de circulation contrôlée du fluide (13) en saillie à l'intérieur du corps longitudinal (2) et situées de part et d'autre de la surface d'appui (22) du méplat correspondant (20) de la base (17) de l'élément de guidage (15) lorsque l'épaulement (21) du méplat (20) est en appui sur la butée de blocage en translation (26).
- le corps longitudinal (2) présente une paroi principale cylindrique (31), les empreintes (24) sont réparties annulairement et régulièrement sur la face interne circulaire (25) de la paroi cylindrique (31) du corps longitudinal (2) et définissent autant d'espaces de guidage en translation (34) de l'organe de circulation contrôlée du fluide (13) dont la largeur (11) est au moins égale à la largeur (I2) de chaque bord longitudinal (33) de la base (17) de l'élément de guidage (15).
- la butée de blocage en translation en saillie (26) et les deux butées de blocage en rotation en saillie (27) de chaque empreinte (24) sont reliées à la paroi cylindrique (31) du corps longitudinal (2) par des surfaces courbes (32,32a).
- la base (17) de l'élément de guidage et de maintien du clapet (15) présente au moins deux évidements longitudinaux (35,36) réalisés dans son épaisseur et débouchant au niveau de la face inférieure (23) de ladite base (27).
- l'un des deux évidements longitudinaux (36) forme évidement de guidage de la tige (14) du clapet (7) de l'organe de circulation contrôlée du fluide (13).

Un autre aspect de l'invention concerne un procédé de montage du raccord tel que précédemment défini, qui est caractérisé en ce qu'il comprend au moins les étapes de :
- introduction de l'organe de circulation contrôlée du fluide (13) dans le corps longitudinal (2) du raccord (1) depuis l'extrémité de jonction (3), et maintien dudit organe (13) au-dessus de la ou des empreintes (24) réalisées sur la face interne (25) du corps longitudinal (2),
- rotation de l'organe de circulation contrôlée du fluide (13) dans le corps longitudinal (2) maintenu au-dessus de la ou des empreintes (24), et positionnement de chaque méplat (20) en regard longitudinal d'une butée de blocage en translation (26) correspondante, et
- relâchement de l'organe de circulation contrôlée du fluide (13) dans le corps longitudinal (2) du raccord (1), ce dont **il** résulte le maintien de l'épaulement (21) du méplat (20) de la base (17) de l'élément de guidage (15) en appui sur la butée de blocage en translation (26) par la force de rappel du ressort (9), la surface d'appui (22) du méplat (20) étant agencée annulairement entre les deux butées de blocage en rotation (27).

Lorsque le raccord présente un corps longitudinal (2) comportant une paroi principale cylindrique (31), et que les empreintes (24) sont réparties annulairement et régulièrement sur la face interne circulaire (25) de la paroi cylindrique (31) du corps longitudinal (2) et définissent autant d'espaces de guidage en translation (34) de l'organe de circulation contrôlée du fluide (13) dont la largeur (11) est au moins égale à la largeur (I2) de chaque bord longitudinal (33) de la base (17) de l'élément de guidage (15), le procédé de l'invention comprend au moins les étapes de :
- introduction de l'organe de circulation contrôlée du fluide (13) dans le corps longitudinal (2) du raccord (1) depuis l'extrémité de jonction (3) par glissement de chaque bord longitudinal (33) de la base (17) de l'élément de guidage (15) dans un espace de guidage coopérant (34) du corps longitudinal (2) et maintien dudit organe (13) au-dessus de la ou des empreintes (24) réalisées sur la face interne (25) du corps longitudinal (2),
- rotation de l'organe de circulation contrôlée du fluide (13) dans le corps longitudinal (2) maintenu au-dessus de la ou des empreintes (24), et positionnement de chaque méplat (20) en regard longitudinal d'une butée de blocage en translation (26) correspondante, et
- relâchement de l'organe de circulation contrôlée du fluide (13) dans le corps longitudinal (2) du raccord (1), ce dont **il** résulte le maintien de l'épaulement (21) du méplat (20) de la base (17) de l'élément de guidage (15) en appui sur la butée de blocage en translation (26) par la force de rappel du ressort (9), la surface d'appui (22) du méplat (20) étant ainsi agencée annulairement entre les deux butées de blocage en rotation (27).

L'invention porte enfin sur un dispositif de couplage de conduite de fluide, caractérisé en ce qu'il comprend un premier raccord (1) tel que précédemment défini formant partie mâle et un second raccord (1') coopérant formant partie femelle, le second raccord comportant :
- un corps longitudinal (2') qui s'étend depuis une extrémité de jonction (3') à une seconde conduite jusqu'à une extrémité de couplage (4') qui entoure l'extrémité de couplage (4) du premier raccord (1), laquelle extrémité de couplage (4') présente un orifice de passage du fluide (5') en communication fluidique avec un canal d'écoulement (6') ménagé dans le corps longitudinal (2') et qui s'étend depuis l'extrémité de couplage (4') jusqu'à l'extrémité de jonction (3'),
- un clapet (7') disposé dans le canal d'écoulement (6') du corps longitudinal (2') et comportant une tête clapet (8') située au niveau de l'orifice de passage (5') de l'extrémité de couplage (4') du corps longitudinal (2'), et qui est déplaçable longitudinalement dans le canal d'écoulement (6') par des moyens d'actionnement (9') entre une position dégagée dans laquelle l'orifice de passage (5') est ouvert, et une position de prise étanche dans laquelle l'orifice de passage (5') est obturé par appui de contact étanche entre la tête clapet (8') et un siège de tête de clapet tronconique (10') ménagé dans le corps longitudinal (2') et dans le prolongement de l'orifice de passage (5'),
et en ce que les têtes de clapets respectives (8, 8') des premier et second raccord (1,1') sont en appui de contact longitudinal et soumises alternativement, par les moyens d'actionnement (9) associés à la tête de clapet (8) du premier raccord (1) et les moyens d'actionnement (9') associés à la tête de clapet (8') du second raccord (1'), en coopération avec la position relative des extrémités de couplage respectives (4,4') des premier (1) et second (1') raccords, à une position concomitante de dégagement des orifices de passage du fluide (5,5') des premier (1) et second (1') raccords, et à une position concomitante d'obturation des orifices de passage du fluide (5,5') des premier (1) et second (1') raccords.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront à la lecture de la description qui suit, en référence aux figures annexées, qui illustrent :
[Fig. 1] La figure 1 est une représentation schématique en coupe longitudinale du raccord de l'invention lorsque le clapet est en position d'obturation de l'orifice de passage du fluide ;
[Fig. 2] La figure 2 est une représentation schématique en coupe longitudinale du dispositif de couplage de conduite de fluide de l'invention lorsque les orifices de passage du fluide des premier et second raccords sont concomitamment obturés par leurs clapets respectifs ;
[Fig. 3] La figure 3 est une représentation schématique en coupe longitudinale de la zone de connexion fluidique du dispositif de couplage de conduite de fluide de l'invention lorsque les orifices de passage du fluide des premier et second raccords sont concomitamment dégagés ;
[Fig. 4] La figure 4 est une représentation schématique en perspective de l'organe de circulation contrôlée du raccord de l'invention selon la variante de réalisation décrite ;
[Fig. 5] La figure 5 est une représentation schématique de dessous de l'élément de guidage et de maintien du clapet de l'organe de circulation contrôlée du fluide du raccord de l'invention ;
[Fig. 6] La figure 6 est une vue agrandie de la partie encadrée VI de la figure 5 ;
[Fig. 7] La figure 7 est une représentation schématique de coté de l'élément de guidage et de maintien du clapet de l'organe de circulation contrôlée du fluide du raccord de l'invention ;
[Fig. 8] La figure 8 est une vue agrandie de la partie encadrée VIII de la figure 7 ;
[Fig. 9] La figure 9 est une représentation schématique en perspectives des empreintes réalisées sur la face interne du corps longitudinal et aptes à coopérer avec les méplats de l'extrémité libre de la base de l'élément de guidage et de maintien du clapet ;
[Fig. 10] La figure 10 est une vue agrandie d'une empreinte ;
[Fig. 11] La figure 11 est une représentation schématique en perspective du système de maintien fixe de l'organe de circulation contrôlée du fluide dans le corps longitudinal comprenant le méplat réalisé au niveau de l'extrémité libre de la base de l'élément de guidage et de maintien du clapet et une empreinte correspondante ménagée sur la face interne du corps longitudinal, le méplat étant en appui sur la butée de blocage en translation ;
[Fig. 12] La figure 12 est une représentation schématique en coupe du système de maintien fixe de l'organe de circulation contrôlée du fluide dans le corps longitudinal illustrant le positionnement de la surface d'appui du méplat de la base de l'élément de guidage et de maintien du clapet entre les butées de blocage en rotation de l'empreinte correspondante ;
[Fig. 13] [Fig. 14] [Fig. 15] Les figures 13, 14 et 15 illustrent les séquences de montage de l'organe de circulation contrôlée dans le corps longitudinal, respectivement l'étape d'introduction de l'organe de circulation dans le corps longitudinal (figure 13), l'étape de maintien au-dessus des empreintes (figure 14) et l'étape de rotation et relâchement de l'organe de circulation contrôlée dans le corps longitudinal (figure 15).

### DESCRIPTION DETAILLEE

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent une variante de l'invention mais qu'il peut exister d'autres modes de réalisation qui répondent à la définition de l'invention.

La présente invention porte principalement sur un raccord sécurisé formant partie d'un dispositif de couplage de conduite de fluide. Le raccord de l'invention prévoit un système de maintien fixe de l'organe de circulation contrôlée du fluide sans pièces rapportées, et dans lequel la coopération entre les différents éléments constituant ledit système assure le montage sécurisé de l'organe de circulation contrôlée du fluide dans le corps longitudinal du raccord.

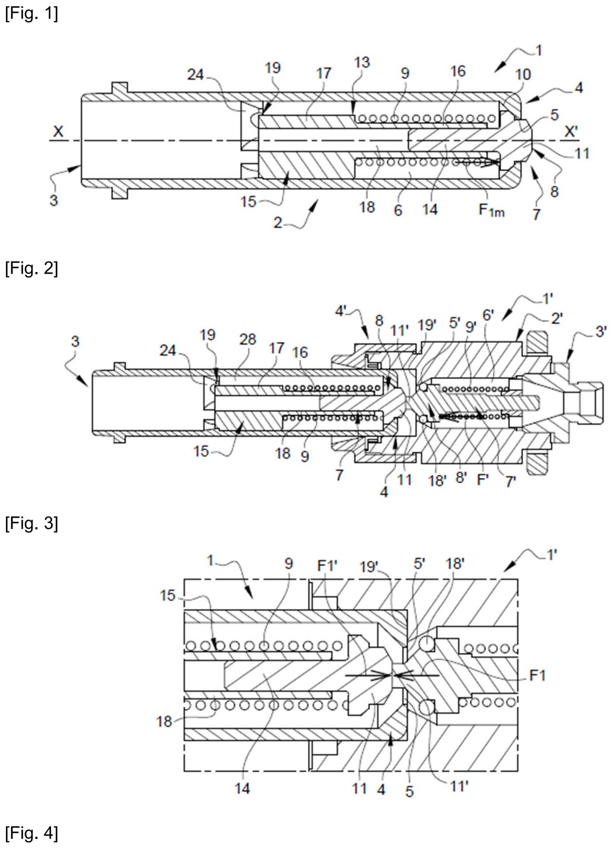

On décrit en premier lieu le raccord de l'invention et sa contextualisation de fonctionnement dans le dispositif de couplage en référence aux figures 1 à 3.

En référence à la figure 1, le raccord mâle 1 comporte un corps longitudinal 2 qui s'étend depuis une extrémité de jonction à une conduite 3 (la conduite n'est pas représentée) jusqu'à une extrémité de couplage 4 à un second raccord femelle 1' coopérant du dispositif de couplage - (figures 2 et 3), laquelle extrémité de couplage 4 présente un orifice de passage du fluide 5 en communication fluidique avec un canal d'écoulement 6 ménagé dans le corps longitudinal 2 et qui s'étend à l'intérieur du corps longitudinal 2 depuis l'extrémité de couplage 4 jusqu'à l'extrémité de jonction 3.

Le raccord mâle 1 comporte en outre un clapet 7 qui est disposé dans le canal d'écoulement 6 du corps longitudinal 2 du côté de l'extrémité de couplage. L'axe principal XX' du clapet 7 s'étend selon l'axe principal XX' du corps longitudinal 2. Le clapet 7 comporte une tête de clapet 8 qui est située au niveau de l'orifice de passage 5 de l'extrémité de couplage 4 du corps longitudinal 2. La tête de clapet 8 s'étend longitudinalement entre une extrémité libre 11 et une base de jonction 15 avec une tige longitudinale 17, laquelle tige 17 s'étend dans un guide tubulaire 18 du raccord 1 formant moyen de guidage longitudinal de la tige 17 dans le raccord 1.

La tête de clapet 8 est déplaçable longitudinalement dans le raccord 1 et plus particulièrement dans le canal d'écoulement 6 vers sa position d'obturation de l'orifice de passage 5, par l'application d'un effort F sur ladite tête clapet 8 par des moyens d'actionnement 9, ici un ressort hélicoïdal entourant le guide tubulaire 18 et s'étendant longitudinalement jusqu'à la base de jonction de la tête de clapet 8. Lorsqu'aucune force extérieure n'est appliquée sur la tête de clapet 8, le ressort 9 au repos exerce une force F1m contre la base de la tête de clapet 8 en entraînant la tête de clapet 8 dans l'orifice de passage 5 en position de prise étanche dans laquelle l'orifice de passage 5 est obturé par appui de contact étanche entre la tête de clapet 8 et un siège de tête de clapet tronconique 10 ménagé dans le corps longitudinal 2 et dans le prolongement interne de l'orifice de passage 5. Dans cette position, l'extrémité libre 11 de la tête de clapet 8 s'étend dans l'orifice de passage 5 en faisant saillie de l'extrémité de couplage 4.

Le clapet 8 est également déplaçable longitudinalement dans le raccord 1, et plus particulièrement dans le canal d'écoulement 6, vers une position dégagée (figure 3) par l'action d'une force F1 exercée depuis l'extérieur du raccord 1 sur l'extrémité libre 11 de la tête de clapet 8 qui entraîne le ressort 9 en compression et l'ouverture de l'orifice de passage de fluide 5.

En référence aux figures 2 et 3, le dispositif de couplage de conduite de fluide comporte le raccord mâle 1 précédemment décrit, et un second raccord femelle 1' qui comporte un corps longitudinal 2' qui s'étend depuis une extrémité de jonction à une seconde conduite 3' (la seconde conduite n'est pas illustrée) jusqu'à une extrémité de couplage 4' qui entoure l'extrémité de couplage 4 du raccord mâle 1 en présentant un évidemment de logement de l'extrémité de couplage 4 comportant un fond 19' en regard de l'extrémité de couplage 4 du raccord mâle 1. Comme pour le raccord mâle 1, l'extrémité de couplage 4' présente un orifice de passage du liquide 5' en communication fluidique avec un canal d'écoulement 6' ménagé dans le corps longitudinal 2' et qui s'étend depuis l'extrémité de couplage 4' jusqu'à l'extrémité de jonction 3'.

Le raccord femelle 1' comporte un clapet 7' qui est disposé dans le canal d'écoulement 6' du corps longitudinal 2' et qui comporte une tête de clapet 8' située au niveau de l'orifice de passage 5' de l'extrémité de couplage 4' du corps longitudinal 2', et qui est déplaçable longitudinalement dans le canal d'écoulement 6' entre une position dégagée dans laquelle l'orifice de passage 5' est ouvert, et une position fermée de prise étanche dans laquelle l'orifice de passage 5' est obturé par appui de contact étanche entre la tête de clapet 8' et le siège de tête de clapet tronconique 10' via un joint d'étanchéité 18'.

Comme pour le premier raccord 1, la tête de clapet 8' du raccord femelle 1' est déplaçable longitudinalement dans le raccord 1', et plus particulièrement dans le canal d'écoulement 6', vers sa position d'obturation de l'orifice de passage 5', par l'application d'un effort F' sur ladite tête clapet 8' par des moyens d'actionnement 9', ici un ressort hélicoïdal entourant la tige du clapet 7' et s'étendant longitudinalement jusqu'à la tête du clapet 8'. Lorsqu'aucune force extérieure n'est appliquée sur la tête du clapet 8', le ressort 9' au repos exerce une force F' contre la base 15' du clapet 8' en entraînant la tête de clapet 8' dans l'orifice de passage 5' en position de prise étanche dans laquelle l'orifice de passage 5' est obturé. Dans cette position, l'extrémité libre 11' de la tête de clapet 8' s'étend dans l'orifice de passage 5' en faisant saillie de l'extrémité de couplage 4'.

La tête de clapet 8' est également déplaçable longitudinalement dans le raccord 1', et plus particulièrement dans le canal d'écoulement 6', vers une position dégagée (figure 3) par l'action d'une force F1' exercée depuis l'extérieur du raccord 1' sur l'extrémité libre 11' de la tête de clapet 8' qui entraîne le ressort 9' en compression et l'ouverture de l'orifice de passage de fluide 5'.

En fonctionnement, les têtes de clapets respectives 8,8' des clapets 7,7' des raccords mâle 1 et femelle 1' sont en appui de contact longitudinal et soumises alternativement à une position concomitante de dégagement des orifices de passage du fluide 5,5' des premier 1 et second 1' raccords (figure 3), et à une position concomitante d'obturation des orifices de passage du fluide 5,5' des premier 1 et second 1' raccords (figure 2).

Le passage de la position concomitante de dégagement à la position concomitante d'obturation met en jeu non seulement les ressorts 9,9' des raccords respectifs 1,1', mais également la position relative des extrémités de couplage respectives 4,4' des premier 1 et second 1' raccords.

Plus précisément, en position concomitante d'obturation des orifices de passage du fluide 5,5' des raccords mâle 1 et femelle 1' (figure 2), le fond 19' de l'évidemment de logement de l'extrémité de couplage 4' du raccord femelle 1' est à distance de l'extrémité de couplage 4 du raccord mâle 1 et les ressorts 9,9' au repos exercent chacun une force d'application F,F' sur les têtes de clapets 8,8' respectivement des raccords mâle 1 et femelle 1', ce dont il résulte que les orifices de passage du fluide 5,5' des raccords mâle 1 et femelle 1' sont tous les deux obturés.

En position concomitante de dégagement des orifices de passage du fluide 5,5' des raccords mâle 1 et femelle 1' (figure 3), le fond 19' de l'évidemment de logement de l'extrémité de couplage 4' du raccord femelle 1' est accolé à l'extrémité de couplage 4 du raccord mâle 1 de sorte que chaque tête de clapet 8,8' des clapets 7,7' des raccords mâle 1 et femelle 1' exerce à l'encontre de la tête de clapet 8',8 du clapet 7',7 de l'autre raccord une force F1',F1 qui entraîne les têtes de clapets 8,8' dans leur position dégagée, les orifices de passage de fluide correspondant 5,5' étant alors ouverts et les canaux d'écoulement 6,6' des raccords mâle 1 et femelle 1' mis en communication de fluide.

Concernant plus particulièrement le raccord mâle 1, on désigne comme organe de circulation contrôlée du fluide 13 logé dans le corps longitudinal 2 un organe qui comprend :
- le clapet 7,
- un élément de guidage et de maintien du clapet 15 comprenant une première partie 16 comportant une zone centrale de logement longitudinal de la tige 18 du clapet 7 de laquelle fait saillie la tête de clapet 8 du côté de l'orifice de passage 5, et une base 17 de plus grand diamètre que la première partie 16 et présentant au moins un canal d'écoulement du fluide 28 depuis l'extrémité de jonction 3 jusqu'à l'extrémité de couplage 4, et
- le ressort comprimé 9 qui s'étend longitudinalement autour de la première partie 16 de l'organe de guidage et de maintien du clapet 15 depuis la tête de clapet 8 comme précédemment décrit jusqu'à la base 17 de l'organe de guidage et de maintien du clapet 15. A cet effet, la base 17 présente un épaulement 29 au niveau de sa jonction avec la première partie 16 contre lequel le ressort comprimé 9 exerce sa force de rappel.

Selon l'invention, le raccord 1 comporte un système de maintien fixe de l'organe de circulation contrôlée du fluide 19 dont une partie est ménagée sur la base 17 de l'organe de guidage et de maintien du clapet 15 et l'autre partie est ménagée sur la face interne 25 du corps longitudinal 2.

On se réfère aux figures 4 à 12 pour décrire le système de maintien fixe de l'organe de circulation contrôlée du fluide 19 selon l'invention.

Le système de maintien fixe de l'organe de circulation contrôlée du fluide 19 comporte en premier lieu au moins un méplat 20 qui est réalisé au niveau de l'extrémité libre 23 de la base 17 de l'élément de guidage et de maintien du clapet 15 du côté opposé au clapet 7 et qui définit un épaulement 21 qui se prolonge par une surface d'appui 22 s'étendant jusqu'à l'extrémité libre 23 de ladite base 17.

Le système de maintien fixe de l'organe de circulation contrôlée du fluide 19 comporte en outre au moins une empreinte 24 réalisée sur la face interne 25 du corps longitudinal 2 qui comprend :
- une butée de blocage en translation 26 de l'organe de circulation contrôlée du fluide 13 en saillie à l'intérieur du corps longitudinal 2 et sur laquelle l'épaulement 21 du méplat 20 de la base 17 de l'élément de guidage 15 est maintenu en appui par la force de rappel du ressort 9, et
- deux butées de blocage en rotation 27 de l'organe de circulation contrôlée du fluide 13 en saillie à l'intérieur du corps longitudinal 2, situées sous la butée de blocage en translation 26 et de part et d'autre de la surface d'appui 22 du méplat 20 de la base 17 de l'élément de guidage 15 lorsque l'épaulement 21 du méplat 20 est en appui sur la butée de blocage en translation 26.

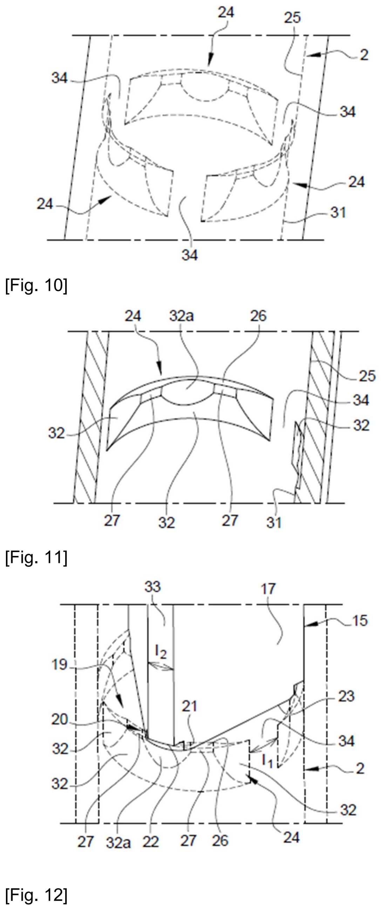

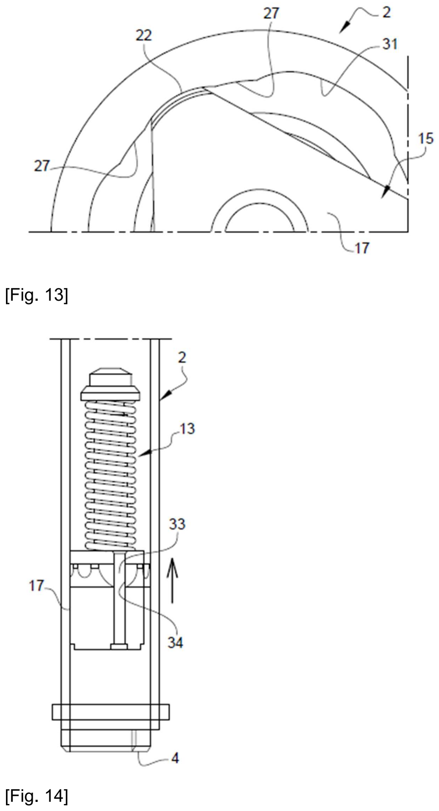

En position sécurisée et après que l'organe de circulation du fluide 13 ait été positionné dans le corps longitudinal 2 au-dessus de l'empreinte 24 (figure 14), le méplat 20 de la base 17 de l'organe de guidage et de maintien du clapet 15 étant disposé en regard longitudinal de la butée de blocage en translation 26, l'organe de circulation du fluide 13 est relâché dans le corps longitudinal 2 et l'épaulement 21 du méplat 20 vient en appui contre la butée de blocage en translation 26 (figure 11) sous l'effet de la seule force de rappel du ressort 9. L'élément de guidage 15 est ainsi bloqué en translation dans le corps longitudinal 2, ce dont il résulte que l'organe de circulation du fluide 13 est également bloqué en translation dans le corps longitudinal 2.

En outre, lorsque l'épaulement 21 du méplat 20 est en appui contre la butée de blocage en translation 26, les deux butées de blocage en rotation 27 de part et d'autre de la surface d'appui 22 du méplat 20 empêchent toute rotation de l'élément de guidage 15 dans le corps longitudinal 2, l'organe de circulation du fluide 13 étant ainsi également bloqué en rotation dans le corps longitudinal 2.

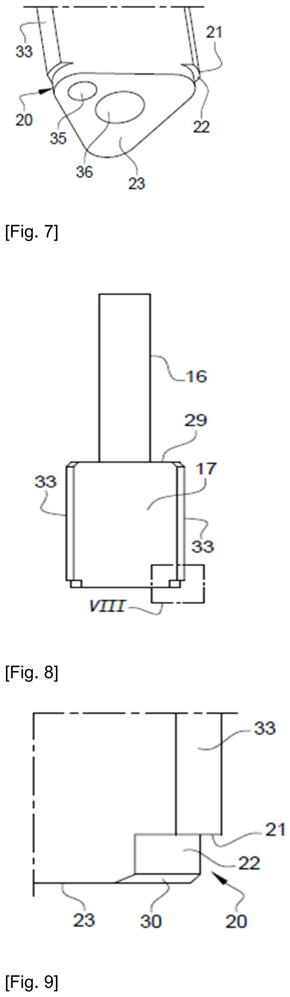

Avantageusement, selon l'invention et en référence à la figure 8, le méplat 20 présente en partie extrémale un biseau 30 permettant d'éviter à l'opérateur qui manipule l'organe de circulation du fluide 13, notamment lors de son introduction dans le corps longitudinal 2, de se blesser au contact d'arêtes tranchantes.

Avantageusement, selon l'invention et en référence à la figure 10, la butée de blocage en translation 26 en saillie vers l'intérieur du corps longitudinal 2 et les deux butées de blocage en rotation 27 en saillie vers l'intérieur du corps longitudinal 2 de l'empreinte 24 sont reliées à la paroi cylindrique 31 du corps longitudinal 2 par des surfaces courbes 32, 32a. Ces surfaces courbes 32,32a permettent d'éviter un changement de surface brutal entre les butées 26,27 et la paroi cylindrique 31 du corps longitudinal qui serait source de concentration de contraintes fragilisant le système de maintien fixe 19. On notera que la surface courbe 32a dans laquelle se loge la surface d'appui 22 du méplat 20 présente également cette dernière fonctionnalité, en plus d'éviter un changement de surface brutal.

Avantageusement, la base 17 de l'élément de guidage 15 présente en section une forme qui définit au moins deux bords longitudinaux d'extrémité 33 dont l'extrémité libre du côté opposé au clapet 7 comporte le méplat 20. Chaque bord longitudinal 33 présente une courbure coïncidant avec la courbure de la face interne 25 du corps longitudinal 2. En outre, le système de maintien fixe 19 de l'invention comporte le même nombre d'empreintes 24 que de méplats 20 et les empreintes 24 sont réparties annulairement et régulièrement sur la face interne 25 du corps longitudinal 2 et définissent autant d'espaces de guidage en translation 34 de l'organe de circulation contrôlée du fluide 13 dont la largeur I1 (figure 11) est au moins égale à la largeur I2 de chaque bord longitudinal 33 afin de permettre l'introduction de l'élément de guidage 15 dans le corps longitudinal 2 par glissement translatoire de chaque bord longitudinal 33 au niveau d'un espace de guidage 34 correspondant comme il sera expliqué plus loin en référence aux figure 13 à 15.

Dans le mode de réalisation illustré sur les figures, la base 17 présente une section sensiblement triangulaire définissant trois bords longitudinaux d'extrémité 33. Le système de maintien fixe 19 présente ainsi trois empreintes 24 réparties annulairement et régulièrement sur la face interne 25 du corps longitudinal 2 et définissent trois espaces de guidage en translation 34 de l'organe de circulation contrôlée du fluide 13 telle que précédemment définies.

Cette configuration triangulaire de la base 17, et plus particulièrement lorsque la section de la base est de type triangle équilatéral, permet d'optimiser la répartition des efforts appliqués sur l'élément de guidage 15 tout en définissant trois canaux de circulation du fluide 28 dans le raccord 1.

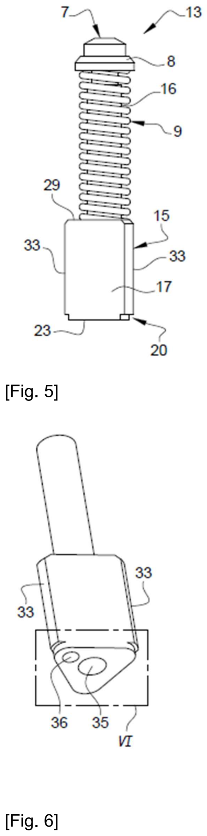

En référence aux figures 5 et 6, la base 17 de l'élément de guidage et de maintien du clapet 15 présente au moins deux évidements longitudinaux 35,36 réalisés dans son épaisseur et débouchant au niveau de la face inférieure 23 de la base 17. Ces évidements permettent à l'opérateur d'introduire l'organe de circulation contrôlée du fluide 13 dans le corps longitudinal 2 par l'utilisation d'un outil coopérant introduit dans ces deux évidements longitudinaux 35,36 et qui permettent également d'assurer la rotation de l'organe 13 lors du montage. Avantageusement, l'évidement central 36 forme également canal de guidage de la tige 14 du clapet 7 de l'organe 13.

On se réfère aux figures 13 à 15 pour décrire le montage de l'organe de circulation contrôlée du fluide 13 dans le corps longitudinal 2.

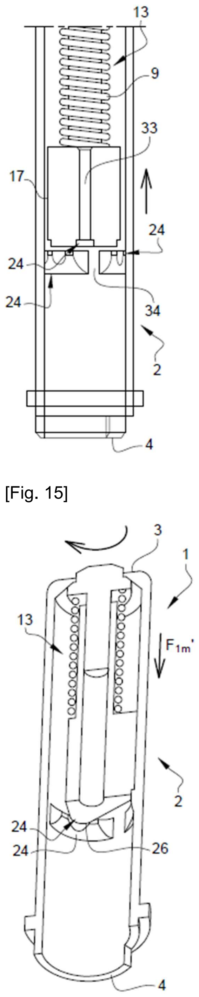

Selon l'invention, le procédé de montage du raccord comprend en premier lieu une étape d'introduction de l'organe de circulation contrôlée du fluide dans le corps longitudinal du raccord 1 depuis l'extrémité de jonction 3. L'introduction de l'organe de circulation contrôlée du fluide 13 est effectuée par l'opérateur au moyen des deux évidements longitudinaux 35,36 (non visibles sur les figures) réalisés sur la base 17 de l'élément de guidage et de maintien du clapet 15 et d'un outil coopérant introduit dans ces deux évidements 35,36. Pour ce faire, les bords longitudinaux 33 de la base 17 de l'élément de guidage et de maintien du clapet 15 sont glissés en translation au niveau des trois espaces de guidage en translation 34 définis par les trois empreintes 24 réparties régulièrement sur le pourtour périmétrique du corps longitudinal 2. Comme visible sur la figure 14, l'organe de circulation contrôlée du fluide 13 est introduit dans le corps longitudinal au-dessus des empreintes 24 en comprimant fortement le ressort 9. En référence à la figure 15, l'organe de circulation contrôlée du fluide 13 est ensuite pivoté de 60° de façon que chaque méplat 20 se trouve en regard longitudinal d'une butée de blocage en translation 26 d'une empreinte correspondante. L'organe de circulation contrôlée du fluide 13 est alors relâché dans le corps longitudinal 2 du raccord 1, la force de rappel F1m' du ressort 9 entraînant l'épaulement 21 du méplat 20 contre la butée de blocage en translation 26, la surface d'appui 22 du méplat 20 étant agencée annulairement entre les deux butées de blocage en rotation 27 comme représenté sur la figure 11.

L'organe de circulation contrôlée du fluide 13 est ainsi solidement et fixement agencé dans le corps longitudinal 2 pendant toute la durée d'utilisation du raccord 1.

## Revendications

1. Raccord destiné à former partie mâle ou femelle d'un dispositif de couplage de conduite de fluide, et comportant :
- un corps longitudinal (2) qui s'étend depuis une extrémité de jonction à une conduite (3) jusqu'à une extrémité de couplage (4) à un second raccord coopérant du dispositif de couplage, laquelle extrémité de couplage (4) présente un orifice de passage du fluide (5) en communication fluidique avec un canal d'écoulement (6) ménagé dans le corps longitudinal (2) et qui s'étend depuis l'extrémité de couplage (4) jusqu'à l'extrémité de jonction (3), et
- un organe de circulation contrôlée du fluide (13) logé dans le corps longitudinal (2) et comportant :
∘ un clapet (7) comprenant une tête de clapet (8) surmontant une tige (14), laquelle tête de clapet (8) est déplaçable longitudinalement entre une position dégagée dans laquelle l'orifice de passage (5) est ouvert, et une position fermée de prise étanche dans laquelle l'orifice de passage (5) est obturé,
∘ un élément de guidage et de maintien du clapet (15) comprenant une première partie (16) comportant une zone centrale de logement longitudinal de la tige (18) du clapet (7) de laquelle fait saillie la tête de clapet (8) du côté de l'orifice de passage (5), et une base (17) de plus grand diamètre que la première partie (16), et
∘ un ressort comprimé (9) s'étendant longitudinalement autour de la première partie (16) de l'organe de guidage et de maintien du clapet (15) depuis la tête de clapet (8) jusqu'à la base (17) de l'organe de de guidage et de maintien du clapet (15),
**caractérisé en ce que** ledit raccord (1) comprend un système de maintien fixe de l'organe de circulation contrôlée du fluide (19) dans le corps longitudinal (2) comprenant :
- au moins un méplat (20) qui est réalisé au niveau d'une extrémité libre (23) de la base (17) de l'élément de guidage et de maintien du clapet (15) du côté opposé au clapet (7) et qui définit un épaulement (21) qui se prolonge par une surface d'appui (22) s'étendant jusqu'à l'extrémité libre (23) de ladite base (17), et
- une empreinte (24) réalisée sur la face interne (25) du corps longitudinal (2) comportant :
∘ une butée de blocage en translation (26) de l'organe de circulation contrôlée du fluide (13) en saillie à l'intérieur du corps longitudinal (2) et sur laquelle l'épaulement (21) du méplat (20) de la base (17) de l'élément de guidage et de maintien du clapet (15) est maintenu en appui par la force de rappel du ressort (9), et
∘ deux butées de blocage en rotation (27) de l'organe de circulation contrôlée du fluide (13) en saillie à l'intérieur du corps longitudinal (2) et situées de part et d'autre de la surface d'appui (22) du méplat (20) de la base (17) de l'élément de guidage (15) lorsque l'épaulement (21) du méplat (20) est en appui sur la butée de blocage en translation (26).

2. Raccord selon la revendication précédente, **caractérisé en ce que** la base (17) de l'élément de guidage et de maintien du clapet (15) présente une section définissant au moins deux bords longitudinaux d'extrémité (33), et **en ce que** l'extrémité libre de chaque bord longitudinal (33) du côté opposé au clapet (7) présente un méplat (20) définissant un épaulement (21) qui se prolonge par une surface d'appui (22) s'étendant jusqu'à l'extrémité libre dudit bord (33), et **en ce que** le système de maintien fixe de l'organe de circulation contrôlée du fluide (13) comporte au moins deux empreintes (24) réalisées à distance périmétrique l'une de l'autre sur la face interne (25) du corps longitudinal (2), recevant chacune un méplat (20), et comportant chacune :
∘ une butée de blocage en translation (26) de l'organe de circulation contrôlée du fluide (13) en saillie à l'intérieur du corps longitudinal (2) et sur laquelle l'épaulement (21) du méplat correspondant (20) de la base (17) de l'élément de guidage (15) est maintenu en appui par la force de rappel du ressort (9), et
∘ deux butées de blocage en rotation (27) de l'organe de circulation contrôlée du fluide (13) en saillie à l'intérieur du corps longitudinal (2) et situées de part et d'autre de la surface d'appui (22) du méplat correspondant (20) de la base (17) de l'élément de guidage (15) lorsque l'épaulement (21) du méplat (20) est en appui sur la butée de blocage en translation (26).

3. Raccord selon l'une quelconque des revendications précédentes, **caractérisé en ce que** la base (17) de l'élément de guidage et de maintien du clapet (15) présente une section sensiblement triangulaire définissant trois bords longitudinaux d'extrémité (33), et **en ce que** l'extrémité libre de chaque bord longitudinal (33) du côté opposé au clapet (7) présente un méplat (20) définissant un épaulement (21) qui se prolonge par une surface d'appui (22) s'étendant jusqu'à l'extrémité libre dudit bord (33), et **en ce que** le système de maintien fixe de l'organe de circulation contrôlée du fluide (13) comporte au moins trois empreintes (24) réalisées à distance périmétrique l'une de l'autre sur la face interne (25) du corps longitudinal (2), recevant chacune un méplat (20), et comportant chacune :
∘ une butée de blocage en translation (26) de l'organe de circulation contrôlée du fluide (13) en saillie à l'intérieur du corps longitudinal (2) et sur laquelle l'épaulement (21) du méplat correspondant (20) de la base (17) de l'élément de guidage (15) est maintenu en appui par la force de rappel du ressort (9), et
∘ deux butées de blocage en rotation (27) de l'organe de circulation contrôlée du fluide (13) en saillie à l'intérieur du corps longitudinal (2) et situées de part et d'autre de la surface d'appui (22) du méplat correspondant (20) de la base (17) de l'élément de guidage (15) lorsque l'épaulement (21) du méplat (20) est en appui sur la butée de blocage en translation (26).

4. Raccord selon l'une quelconque des revendications 2 et 3, **caractérisé en ce que** le corps longitudinal (2) présente une paroi principale cylindrique (31), et **en ce que** les empreintes (24) sont réparties annulairement et régulièrement sur la face interne circulaire (25) de la paroi cylindrique (31) du corps longitudinal (2) et définissent autant d'espaces de guidage en translation (34) de l'organe de circulation contrôlée du fluide (13) dont la largeur (11) est au moins égale à la largeur (I2) de chaque bord longitudinal (33) de la base (17) de l'élément de guidage (15).

5. Raccord selon l'une quelconque des revendications précédentes, **caractérisé en ce que** la butée de blocage en translation en saillie (26) et les deux butées de blocage en rotation en saillie (27) de chaque empreinte (24) sont reliées à la paroi cylindrique (31) du corps longitudinal (2) par des surfaces courbes (32,32a).

6. Raccord selon l'une quelconque des revendications précédentes, **caractérisé en ce que** la base (17) de l'élément de guidage et de maintien du clapet (15) présente au moins deux évidements longitudinaux (35,36) réalisés dans son épaisseur et débouchant au niveau de la face inférieure (23) de ladite base (27).

7. Raccord selon la revendication précédente, **caractérisé en ce que** l'un des deux évidements longitudinaux (36) forme évidement de guidage de la tige (14) du clapet (7) de l'organe de circulation contrôlée du fluide (13).

8. Procédé de montage du raccord selon l'une quelconque des revendications précédentes, **caractérisé en ce qu'**il comprend au moins les étapes de :
- introduction de l'organe de circulation contrôlée du fluide (13) dans le corps longitudinal (2) du raccord (1) depuis l'extrémité de jonction (3), et maintien dudit organe (13) au-dessus de la ou des empreintes (24) réalisées sur la face interne (25) du corps longitudinal (2),
- rotation de l'organe de circulation contrôlée du fluide (13) dans le corps longitudinal (2) maintenu au-dessus de la ou des empreintes (24), et positionnement de chaque méplat (20) en regard longitudinal d'une butée de blocage en translation (26) correspondante, et
- relâchement de l'organe de circulation contrôlée du fluide (13) dans le corps longitudinal (2) du raccord (1), ce dont **il** résulte le maintien de l'épaulement (21) du méplat (20) de la base (17) de l'élément de guidage (15) en appui sur la butée de blocage en translation (26) par la force de rappel du ressort (9), la surface d'appui (22) du méplat (20) étant agencée annulairement entre les deux butées de blocage en rotation (27).

9. Procédé selon la revendication précédente de montage du raccord selon la revendication 4, **caractérisé en ce qu'**il comprend au moins les étapes de :
- introduction de l'organe de circulation contrôlée du fluide (13) dans le corps longitudinal (2) du raccord (1) depuis l'extrémité de jonction (3) par glissement de chaque bord longitudinal (33) de la base (17) de l'élément de guidage (15) dans un espace de guidage coopérant (34) du corps longitudinal (2) et maintien dudit organe (13) au-dessus de la ou des empreintes (24) réalisées sur la face interne (25) du corps longitudinal (2),
- rotation de l'organe de circulation contrôlée du fluide (13) dans le corps longitudinal (2) maintenu au-dessus de la ou des empreintes (24), et positionnement de chaque méplat (20) en regard longitudinal d'une butée de blocage en translation (26) correspondante, et
- relâchement de l'organe de circulation contrôlée du fluide (13) dans le corps longitudinal (2) du raccord (1), ce dont il résulte le maintien de l'épaulement (21) du méplat (20) de la base (17) de l'élément de guidage (15) en appui sur la butée de blocage en translation (26) par la force de rappel du ressort (9), la surface d'appui (22) du méplat (20) étant ainsi agencée annulairement entre les deux butées de blocage en rotation (27).

10. Dispositif de couplage de conduite de fluide, **caractérisé en ce qu'**il comprend un premier raccord (1) selon l'une quelconque des revendications 1 à 7 formant partie mâle et un second raccord (1') coopérant formant partie femelle, le second raccord comportant :
- un corps longitudinal (2') qui s'étend depuis une extrémité de jonction (3') à une seconde conduite jusqu'à une extrémité de couplage (4') qui entoure l'extrémité de couplage (4) du premier raccord (1), laquelle extrémité de couplage (4') présente un orifice de passage du fluide (5') en communication fluidique avec un canal d'écoulement (6') ménagé dans le corps longitudinal (2') et qui s'étend depuis l'extrémité de couplage (4') jusqu'à l'extrémité de jonction (3'),
- un clapet (7') disposé dans le canal d'écoulement (6') du corps longitudinal (2') et comportant une tête clapet (8') située au niveau de l'orifice de passage (5') de l'extrémité de couplage (4') du corps longitudinal (2'), et qui est déplaçable longitudinalement dans le canal d'écoulement (6') par des moyens d'actionnement (9') entre une position dégagée dans laquelle l'orifice de passage (5') est ouvert, et une position de prise étanche dans laquelle l'orifice de passage (5') est obturé par appui de contact étanche entre la tête clapet (8') et un siège de tête de clapet tronconique (10') ménagé dans le corps longitudinal (2') et dans le prolongement de l'orifice de passage (5'),
et **en ce que** les têtes de clapets respectives (8, 8') des premier et second raccord (1,1') sont en appui de contact longitudinal et soumises alternativement, par les moyens d'actionnement (9) associés à la tête de clapet (8) du premier raccord (1) et les moyens d'actionnement (9') associés à la tête de clapet (8') du second raccord (1'), en coopération avec la position relative des extrémités de couplage respectives (4,4') des premier (1) et second (1') raccords, à une position concomitante de dégagement des orifices de passage du fluide (5,5') des premier (1) et second (1') raccords, et à une position concomitante d'obturation des orifices de passage du fluide (5,5') des premier (1) et second (1') raccords.
